# EUROPEAN PATENT SPECIFICATION

(11) **EP 1 468 781 B1**
(45) Date of publication and mention of the grant of the patent: **07.10.2009**
(21) Application number: 04007622.6
(22) Date of filing: 30.03.2004
(51) Int. Cl.: B23Q 5/38, B23Q 5/28

(54) **Drive system for machine tools and machine tool equipped with such drive system**
Antriebssystem für Werkzeugmaschinen sowie Werkzeugmaschine mit einem solchen Antriebssystem
Système d'avance pour machine-outils et machine-outil avec un tel système d'avance

(30) Priority: 17.04.2003 IT tv20030067
(43) Date of publication of application: 20.10.2004
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Agostini, Agostino

(56) References cited:
- DE-A- 3 938 970
- US-A- 3 709 621
- US-A- 5 345 832
- US-A- 5 546 826

## Description

The present invention refers to a drive system for displacing movable members of machine tools along linear axes.

In the field of machine tools, use is made in general of many different drive systems according to the type of machine tool and the particular application in which and for which they are going to be used.

In many categories of machine tools, including those used to process stone materials, which make use of movable members adapted to perform linear displacements, a largely implemented solution is based on the use of a rack-and-pinion drive system employing gear-motors that consist of a motor in most cases electric and a reduction gear. Usually, each such movable member of a machine tool is provided with at least one gear-motor, on the output shaft of which there is mounted a pinion adapted to mesh with a rack mounted on the stationary structure of the machine tool. When the motor is energized, the pinion is rotatably driven at a reduced speed and, by meshing with the rack, enables the related movable member to be displaced. It is of course also possible, and functionally equivalent, for the rack (or the racks, as the case may be) to be mounted on the movable member and the gear-motor (or the gear-motors, as the case may be) to be mounted on the stationary structure of the machine tool.

Although easily applicable, the rack-and-pinion drive system has a number of drawbacks.

In the first place, the presence of the gear-motor does not allow for very accurate displacements of the movable member, owing to the unavoidable mechanical clearances, i.e. both the ones that are inherent to the construction of the reduction gear and the ones that are due to the thermal expansion of the gears as caused by the heat generated as a consequence of the significant friction occurring between the gears in the speed reducer.

In the second place, it should be kept in mind that, when the movable member reverses the direction of its motion, the contact surfaces change between the teeth of the pinion and the teeth of the rack. As a result, for a certain period of time, although quite a short one, the pinion finds itself idling prior to assuming a new position in which it meshes again with the rack, and this obviously implies a loss in accuracy. Now, such loss of accuracy may prove unacceptable in the case of numerically controlled machining centres and other machine tools for precision machining applications, owing to the rather large clearance existing between pinion and rack, which moreover tends to increase due to the wear-and-tear effects of the operation thereof.

In the third place, in the case that two speed-reducing gear-motors are used to displace particularly large and/or heavy members, each such gear-motor being of course provided with its own pinion and associated racks, the need also arises for the machine tool itself to be properly equipped with quite delicate and expensive control means. Such control means have to ensure a synchronized operation of the gear-motors so as to prevent the respective movable members from getting stuck or being misaligned with respect to the stationary structure of the machine tool.

In view of improving the processing quality in general and, more particularly, doing away with the problems that generally arise during motion reversals, use can be made, instead of a single pinion, of a pair of duly biased pinions, i.e. a pair of pinions that are urged in mutually opposite directions by respective elastic or similar systems against the member meshing therewith. This solution has the advantage that, owing to each such pinion meshing on opposite faces of the teeth of a single and same rack, the clearance between the teeth of the pinions and the teeth of the rack is substantially eliminated; on the other hand, however, this implies a sharp increase in both mechanical losses and manufacturing cost of the entire drive system, while the considerable clearances inherent to the speed-reducer would in any case still exist.

Another solution, which has been developed in more recent times, is based on the use of a so-called precision-ground recirculating ball screw meshing with an associated feed or lead nut. The screw is coupled with the output shaft of the driving motor and may be installed on the member to be displaced, whereas the feed nut is attached to the stationary structure of the machine tool. Alternatively, the output shaft of the driving motor may be coupled to the feed nut, which - as the motor itself - is mounted on the member to be displaced, for instance by means of driving belts, whereas the screw is positioned on the stationary structure of the machine tool. Unfortunately, this solution is not such as to allow a sufficiently high displacement speed of the movable member; furthermore, it suffers from the thermal expansion deriving from the friction occurring between the screw and the feed nut. Moreover, the very presence of a precision-ground recirculating ball screw makes it difficult, if not right-away impossible, for this solution to be used on machine tools intended to process large-sized workpieces, in which the movable members are subject to very long displacements.

A last possible solution would be the use of linear motors. These motors, however, tend to heat up to a quite considerable extent during the operation thereof, so that a quite expensive cooling circuit has to be implemented if the machine tool is going to be used for high-precision processing applications in order to prevent structural parts from undergoing any distortion and expansion problems that may occur as a consequence of heating. In addition, the use of linear motors is only possible on machine tools that are specifically designed to such a purpose through a design process that is certainly much more complex than the one required in the case of machine tools using other types of drive systems.

Also belonging to the state of art are US-A-5,546,826 and US-A-3 709 621.

US-A-5 546 826 discloses a machine tool with a drive system according to the preamble of claim 1, and with a portal-type bead structure comprising a pair of shoulders supporting respective racks along which is movable a member comprising pinions meshing with said racks. Said member is movable along an axis parallel to the axis of the driving motor.

US-A-3 709 621 discloses a machine tool in which at least one movable table is driven by a so-called torque motor.

It therefore is a main object of the present invention to provide a drive system adapted to ensure the displacement along a linear axis of a movable member of a machine tool, which does effectively away with the above-cited drawbacks and disadvantages of prior-art solutions by at the same time proving in particular very accurate, rapid, of a simple construction and subject to reduced heating effects.

Another object of the present invention is to provide a drive system which can be used even on large-sized machine tools and on machines tools that were originally designed for making use of different i. e. conventional drive systems.

According to the present invention, these and other objects are achieved by a drive system incorporating the characteristics recited in the appended claims, as this shall be apparent from the description that is given below by way of non-limiting example with reference to the accompanying drawings, in which:
- Figure 1 is a partial front and cross-sectional view of the upper portion of a machine tool, the crosspiece member of which is displaceably driven by a first embodiment of a drive system according to the present invention;
- Figure 2 is a cross-sectional, enlarged-scale view along the line A-A of Figure 1;
- Figure 3 is a view similar to the one shown in Figure 1, however illustrating a second embodiment of a drive system according to the present invention.

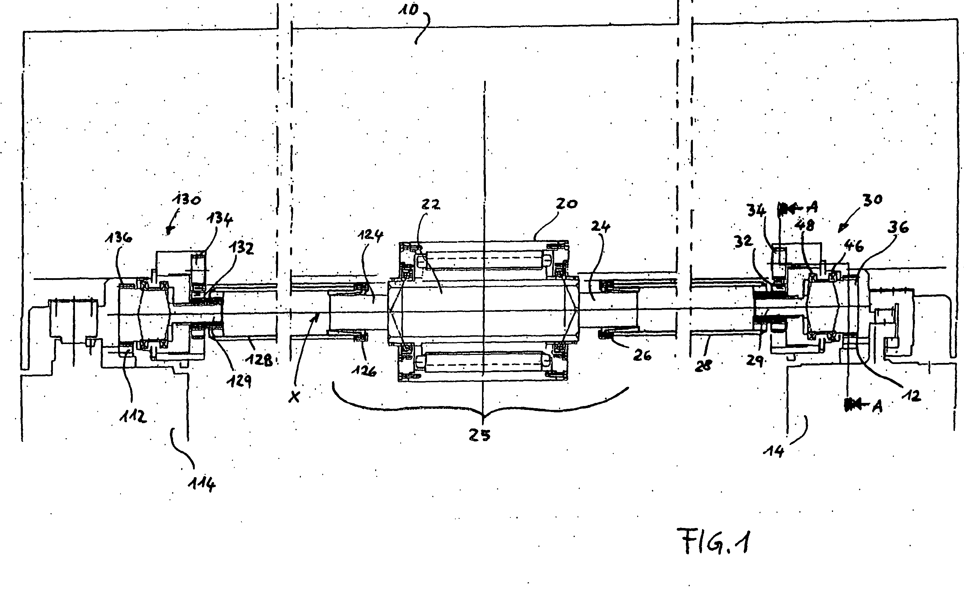

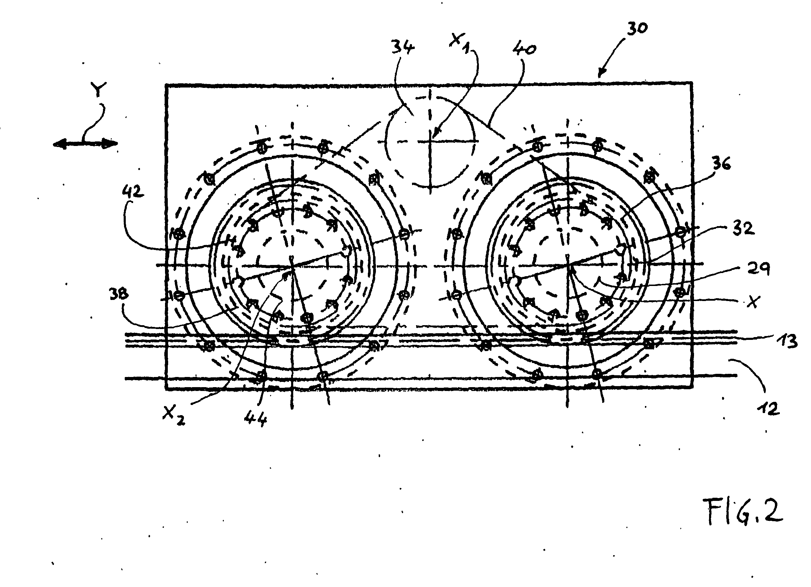

Figure 1 illustrates in a merely schematic manner, and generally designated by reference numeral 10, the crosspiece member that forms the member of a machine tool, such as for example a machine tool for milling, drilling and shaping in general of metal work-pieces, that has to be displaced along a linear axis Y (indicated in Figure 2 only) extending perpendicularly to the drawing plane of Figure 1. As explained in greater detail below, the travelling routes of the crosspiece member 10 are in fact flanked by two racks 12, 112 arranged at the top of a pair of shoulders 14, 114 that are part of a portal-type machine bed forming the stationary structure of the machine tool. The crosspiece member 10 performs as a support and a guide for an operating unit (not shown), which usually comprises a carriage supporting the tool-holding spindle.

According to a main feature of the present invention, for carrying out the displacements of the crosspiece member 10, use is made of a direct-drive rotating motor 20, more specifically a motor of the type known as "torque motor" having its axis of rotation X perpendicular to the linear displacement axis Y. The main features of such "torque motor", also known as "direct-drive motor" and made for example by Siemens, may be summarized as follows:
- no additional drive parts, e. g. gears, are required thus the motor has low space requirements and friction problems are reduced to a minimum;
- it does not involve any clearances, so that it ensures very accurate displacements,
- the stator and the rotor (both of them also being of the permanent-magnet type and, therefore, quite reliable) are pre-assembled, so that this type of motor can be most easily be integrated also in existing machine structures.

Largely known in the art is the use of such type of motor to drive swivel or revolving axes and rotary tables, as well as to displace machine-tool members along revolving axes, whereas the present invention proposes to use the same type of motor to drive movable machine-tool members for displacement along linear axes.

In the embodiment illustrated in Figures 1 and 2, the motor 20 is secured to the crosspiece member 10 in a central position and is provided with a shaft 22 protruding on both sides thereof. At the ends of this shaft there are provided two hubs 24, 124 that extend in opposite directions along the same axis X, the latter being also the axis of rotation of the motor 20. For greater convenience, the sub-assembly formed by the motor 20, the shaft 22 and the hubs 24, 124 will be referred to here as motor drive unit, as generally indicated with the reference numeral 25.

At the ends of the motor drive unit 25 there are attached, via respective joints 26, 126, two secondary hollow shafts 28 and 128 that are provided with respective appendices 29 and 129, which equally extend along said axis X. These secondary shafts 28 and 128 either directly drive a pinion attached to the end portions thereof or - in a more sophisticated version of the present invention, which is the one that is described here in full detail with reference to the accompanying drawing - they drive respective rotary sub-assemblies 30 and 130 that shall be referred to here as right-hand sub-assembly and left-hand sub-assembly, respectively. Of the said rotary sub-assemblies 30 and 130, Figure 1 shows:
- the driving pulleys 32 and 132, which are mounted on the appendices 29 and 129 of the secondary shafts 28 and 128,
- the driven pulleys 34 and 134,
- the first one of the two pinions 36 and 136, which are a part of each one of the same sub-assemblies 30 and 130.

Since the sub-assemblies 30 and 130 are alike, for a greater simplicity the following description will only refer to the right-hand sub-assembly 30, while at the same time referring specifically to the cross-sectional view appearing in Figure 2. This Figure can be noticed to show, further to the first pinion 36 already mentioned above, also the cog belt 40 which, via the related pulley or second pulley 42, as it is also called in this description, rotatably drives a second pinion 38, which equally meshes with the rack 12 and, more precisely, on opposite faces of the teeth 13 of the rack 12. As a result, both the first pinion 36 and the second pinion 38 are biased, i.e. pre-loaded by the action of the tension held in the belt 40, so that all clearances between the teeth of the pinions and the rack are eliminated.

In the embodiment being considered in this case (which, as this has already been stated hereinbefore, is not an exclusive and sole embodiment of the present invention, but is rather illustrated as a mere example thereof), both the driving pulley 32 and the first pinion 36 share the same axis X as the motor drive unit 25. The driving pulley 32 and the first pinion 36 are in fact mounted on the appendix 29 of the secondary shaft 28, said appendix being supported by a pair of bearings 46 and 48 situated within the body of the sub-assembly 30, whereas the driven pulley 34 has an axis indicated at X₁, which extends over and parallel to the same axis X, as well as to the axis X₂ of the shaft 44 of the second pulley 42 and the second pinion 38. It is however understood that the invention may be implemented by also mounting the driving pulley 32 along the axis X₁, if not along the axis X₂, and having the above-described construction details and items duly modified accordingly, as all those skilled in the art would be capable of readily appreciating.

It is anyway readily apparent that, when the torque motor 20 is energized, the rotation of the motor drive unit 25 about the axis X is transmitted directly to each one of the pinions situated at the ends thereof or - in the embodiment that has been just described above - to the two pairs of biased pinions that are part of the sub-assemblies 30 and 130, such as the pinions 36 and 38, via respective, mutually similar kinematical chains, of which the one associated with the right-hand side of the crosspiece member 10 is constituted by the driving pulley 32, the toothed belt 40, the driven pulley 34 and the second pulley 42. Since the racks 12 and 112 are rigidly secured to the respective shoulders 14 and 114 of the machine, the crosspiece member 10 displaces in the direction of the axis Y which, as stated above, is perpendicular to the axis X of the motor drive unit 25 (as indicated in Figure 2). Obviously, the displacement direction Y of the crosspiece member 10 is orthogonal also to the drawing plane of Figure 1.

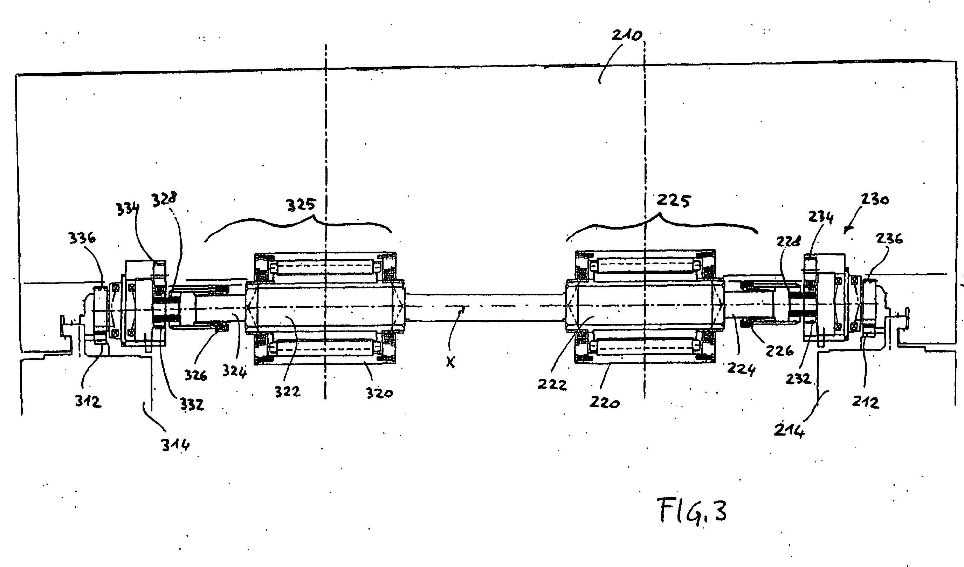

The embodiment of the invention illustrated in Figure 3 is particularly suitable for use in conjunction with a large-size, portal-type machine tool, and provides for the use of a pair of motor drive units 225 and 325, which are attached to a crosspiece member 210 and are aligned along the same axis X so as to ensure the capability thereof of performing linear displacements along the racks 212 and 312 situated in the upper portion of the two stationary shoulders 214 and 314, i.e. along a linear axis Y extending perpendicularly to said axis X and perpendicularly to the plane of Figure 3, as well.

The first motor drive unit 225 comprises a first torque motor 220, the shaft 222 thereof and the hub 224 provided at the free end portion of said shaft, whereas the second motor drive unit 325 comprises a second torque motor 320, the shaft 322 thereof and the hub 324 provided at the free end portion of said shaft. In order to enable them to operate in full synchrony with each other, the two motor drive units 225 and 325 can be connected with each other either through mechanical means - as illustrated schematically for example in the accompanying drawing in the form of a non-deformable shaft 250 that is firmly joined to the shafts 222 and 322 - or by means of two further hubs (not shown) provided at the end portions of the shafts 222 and 322 that are opposite to the end portions of the hubs 224 and 324, said further hubs being connected with each other via a hollow shaft and related fastening and locking means.

In the embodiment illustrated in Figure 3, the end portions of the motor drive units 225 and 325, i.e. the hubs 224 and 324, are secured to two secondary shafts 228 and 328 by means of respective joints 226 and 326. Also in this case, the secondary shafts 228 and 328 either directly drive a pinion provided at their end portion or - in a more sophisticated version, which is the illustrated one, actually - they drive a pair of sub-assemblies 230 and 330, i.e. a right-hand one and a left-hand one, respectively, which are made substantially as described hereinbefore in connection with the embodiment illustrated in Figure 2. Each one of these sub-assemblies in fact comprises, among other things, a driving pulley 232 and 332, two driven pulleys, a toothed belt, as well as biased pinions. As a matter of fact, in the right-hand sub-assembly 230 illustrated in Figure 3 there are only to be seen a single driven pulley 234 and a single pinion 236, which is part of the pair of pinions comprised in the same sub-assembly and meshes with the rack 212 provided on the upper portion of the shoulder 214, while in the left-hand sub-assembly 330 illustrated in Figure 3 there are only to be seen a single driven pulley 334 and a single pinion 336, which is again part of the pair of pinions comprised in the same sub-assembly and meshes with the rack 312 provided on the upper portion of the shoulder 314.

The operation of this second embodiment of a drive system according to the present invention is much the same as the one of the preceding embodiment, so that the same considerations apply as the ones that have been set forth hereinbefore.

The advantages deriving from the present invention for displacing the movable member of a machine tool along a linear axis may be summarized as follows:
- the very low inertia of the rotary parts involved enables the above-mentioned displacements to be performed at a very high speed, thereby drastically enhancing the productivity of the machine tool;
- the parts that are subject to heating during operation are reduced to a minimum, i.e. practically to the sole torque motors, which can on the other hand be provided with an appropriate cooling circuit of quite simple construction;
- the displacements themselves are extremely accurate, since there are neither clearances due to intermediate motion-transmission members (such as speed reducers, recirculating ball screws and the like, nor expansion or distortion effects due to heating;
- the construction of the drive system is simple and relatively low-cost;
- the drive system itself may also be used on large-size machine tools, where it maintains its peculiar characteristics fully unaltered;
- the drive system and the machine tool can be designed independently of each other, so that the possibility is given for a drive system according to the present invention to be retrofitted on an existing machine tool.

It will be readily appreciated that the present invention may be developed and implemented in a number of different embodiments and variants thereof without departing from its scope as defined by the appended claims. For example, unlike the afore-described embodiments, in which the motor drive units and the pinions are provided on the member (crosspiece) of the machine tool to be displaced along a linear axis, the machine may have the motor drive units and the pinions secured to the stationary structure thereof and the racks situated on the movable member.

## Claims

1. Drive system of a machine tool where a member (10; 210) is movable along a first linear axis (Y) on a stationary structure (14, 114; 214, 314), the system comprising at least one motor (20; 220, 320), which may be mounted either on said movable member or on said stationary structure, is aligned along a second linear axis (X) and drives at least a pair of pinions (36, 136; 236, 336) which mesh with at least two racks (12, 112; 212, 312) that are in turn mounted either on said movable member (10; 110) or on the stationary structure of the machine, as the case may be, **characterized in that** said at least one motor (20; 220, 320) is a direct-drive electric motor of the type known as torque motor arranged with its axis (X) orthogonal to the linear displacement axis (Y) of said movable member (10; 210) and said at least pair of pinions (36, 136; 236, 336) has the same axis (X) as the motor and wherein said at least one motor (20; 220, 320) is comprised in a drive unit (25; 225, 325) which also comprises a shaft (22; 222, 322) of the type protruding on both sides of the motor, wherein said motor drive unit also comprises said pair of pinions at each end of said shaft and driven by said shaft.

2. Drive system according to claim 1, **characterized in that** said drive unit also comprises a pair of hubs (24; 124, 224, 324) provided at the ends of said shaft for driving at least a corresponding sub-assembly (30, 130, 230, 330) that includes at least one driving pulley (32, 132, 232, 332), a pair of driven pulleys (34, 42, 134), motion-transmission members preferably consisting of toothed belts (40) and at least an additional pinion (38) having an axis (X₂) parallel to said axis (X), so that the teeth of each pinion (36, 38) mesh with opposite faces of the teeth (13) of the corresponding rack (12).

3. Drive system for machine tools according to claim 1, **characterized by** two motors (220, 320) comprised in respective drive units (225, 325) which also comprise respective shafts (222, 322) aligned along a same axis (X) and connected with each other through mechanical means adapted to enable said motor drive units (225, 325) to operate in full synchrony.

4. Drive system for machine tools according to claims 2 and 3, **characterized in that** each one of said two motor drive units (225, 325) drives, by means of the free ends of each motor (220, 320), a corresponding sub-assembly (230, 330).

5. Drive system for machine tools according to claim 3, **characterized in that** said means adapted to enable said two motor drive units (225, 325) to operate in full synchrony consist of a non-deformable shaft (250) firmly joined to the shafts (222, 322) of the same motor drive units (225, 325).

6. Machine tool comprising a stationary structure with a pair of spaced apart supports (14, 114; 214, 314) and a member (10; 210) which is movable by a drive system according to any of the preceding claims.

7. Machine tool according to claim 6 in which said stationary structure is a portal-type bed provided with two shoulders (14, 114; 214, 314) and said movable member is a crosspiece member (10; 21)in which said shoulders support respective racks (12, 112; 212, 312), each one of which meshes with at least one of said pinions (36, 38, 136; 236, 336) that is part of at least one motor-driven sub-assembly (30, 130; 230, 330).

## Patentansprüche

1. Antriebssystem einer Werkzeugmaschine, worin ein Bauteil (10; 210) entlang einer ersten linearen Achse (Y) auf einem festen Aufbau (14, 114; 214, 314) beweglich ist, wobei das System mindestens einen Motor (20; 220, 320) aufweist, der entweder auf dem beweglichen Bauteil oder auf dem festen Aufbau angeordnet sein kann, der entlang einer zweiten linearen Achse (X) angeordnet ist und der mindestens ein Paar Ritzel (36, 136; 236, 336) antreibt, die mit mindestens zwei Gestellen (12, 112; 212, 312) in Eingriff sind, die wiederum entweder auf dem beweglichen Bauteil (10; 110) oder, je nach dem, auf dem festen Aufbau der Maschine angeordnet sind, **dadurch gekennzeichnet, dass** der mindestens eine Motor (20; 220, 320) ein Elektromotor mit Direktantrieb von dem Typ ist, der als Drehmomentmotor bekannt ist, mit seiner Achse (X) senkrecht zu der linearen Verschiebungsachse (Y) des beweglichen Bauteils (10; 210) und dass das zumindest eine Paar Ritzel (36, 136; 236, 336) dieselbe Achse (X) wie der Motor hat, und wobei der mindestens eine Motor (20; 220, 320) von einer Antriebseinheit (25; 225, 325) aufgewiesen wird, die auch eine Welle (22; 222, 322) aufweist, die aus beiden Seiten des Motors herausragt, wobei die Motorantriebseinheit auch das Paar Ritzel, an jedem Ende der Welle und von der Welle angetrieben, aufweist.

2. Antriebssystem gemäß Anspruch 1, **dadurch gekennzeichnet, dass** die Antriebseinheit auch ein Paar Naben (24; 124, 224, 324) aufweist, die an den Enden der Welle zum Antreiben von zumindest einem entsprechenden Unteraufbau (30, 130, 230, 330) vorgesehen sind, der mindestens eine Treibscheibe (32, 132, 232, 332), ein Paar angetriebene Riemenscheiben (34, 42, 134), Bewegungs-Übertragungsbauteile, die vorzugsweise aus Zahnriemen (40) und mindestens einem zusätzlichen Ritzel (38), das eine Achse (X₂) parallel zu der Achse (X) hat, bestehen, so dass die Zähne von jedem Ritzel (36, 38) in Eingriff mit den gegenüberliegenden Seiten der Zähne (13) des entsprechenden Gestells (12) sind.

3. Antriebssystem für Werkzeugmaschinen gemäß Anspruch 1, **dadurch gekennzeichnet, dass** zwei Motoren (220, 320), die in entsprechenden Antriebseinheiten (225, 325) enthalten sind, welche auch entsprechende Wellen (222, 322), die entlang einer selben Achse (X) ausgerichtet und durch mechanische Mittel miteinander verbunden sind, aufweisen, die dazu ausgelegt sind, zu ermöglichen, dass die Motorantriebseinheiten (225, 325) in voller Synchronität arbeiten.

4. Antriebssystem für Werkzeugmaschinen gemäß den Ansprüchen 2 und 3, **dadurch gekennzeichnet, dass** jede der zwei Motorantriebseinheiten (225, 325) mittels der freien Enden jedes Motors (220, 320) einen entsprechenden Unteraufbau (230, 330) antreibt.

5. Antriebssystem für Werkzeugmaschinen gemäß Anspruch 3, **dadurch gekennzeichnet, dass** die Mittel, die dazu ausgelegt sind, zu ermöglichen, dass die beiden Motorantriebseinheiten (225, 325) in voller Synchronität arbeiten, aus einer nicht verformbaren Welle (250) bestehen, die fest mit den Wellen (222, 322) derselben Motorantriebseinheiten (225, 325) verbunden sind.

6. Werkzeugmaschine, die einen festen Aufbau mit einem Paar beabstandeter Auflagen (14, 114; 214, 314) und ein Bauteil (10; 210), das durch ein Antriebssystem gemäß einem der vorhergehenden Ansprüche beweglich ist, aufweist.

7. Werkzeugmaschine gemäß Anspruch 6, in welcher der feste Aufbau ein Portalbett ist, das mit zwei Schultern (14, 114; 214, 314) versehen ist, und das bewegliche Bauteil ein Querträgerbauteil (10; 21) ist, in dem die Schultern die entsprechenden Gestelle (12, 112; 212, 312) tragen, wobei jedes mit mindestens einem der Ritzel (36, 38, 136; 236, 336), das Teil von mindestens einem motorgetriebenen Unteraufbau (30, 130; 230, 330) ist, in Eingriff ist.

## Revendications

1. Système d'entraînement d'une machine-outil dans lequel un élément (10 ; 210) est mobile le long d'un premier axe linéaire (Y) sur une structure stationnaire (14, 114 ; 214, 314), le système comportant au moins un moteur (20, 220, 320), qui peut être monté soit sur ledit élément mobile, soit sur ladite structure stationnaire, qui est aligné le long d'un second axe linéaire (X) et entraîne au moins une paire de pignons (36, 136 ; 236, 336) qui engrènent avec au moins deux crémaillères (12, 112 ; 212, 312) qui sont à leur tour montées, soit sur ledit élément mobile (10, 210), soit sur ladite structure stationnaire de la machine selon le cas, **caractérisé en ce que** ledit au moins un moteur (20 ; 220, 320) est un moteur électrique à commande directe du type connu comme moteur couple, disposé avec son axe (X) orthogonal à l'axe de déplacement linéaire (Y) dudit élément mobile (10 ; 210) et que ladite au moins une paire de pignons (36, 136 ; 236, 336) a le même axe (X) que le moteur, ledit au moins un moteur (20 ; 220, 320) étant intégré à une unité d'entraînement (25 ; 225, 325) qui comporte également un arbre (22 ; 222, 322) du type dépassant des deux côtés du moteur et ladite unité d'entraînement du moteur (25 ; 225, 325) comprenant également ladite paire de pignons à chaque extrémité dudit arbre et entraînée par lui.

2. Système d'entraînement selon la revendication 1, **caractérisé en ce que** ladite unité d'entraînement comporte également une paire de moyeux (24 ; 124, 224, 324) disposés à chaque extrémité dudit arbre pour entraîner au moins un sous-ensemble (30, 130, 230, 330) correspondant qui présente au moins une poulie d'entraînement (34, 42, 134), des moyens de transmission du mouvement consistant de préférence en courroies crantées (40) et au moins un pignon supplémentaire (38) ayant un axe (X₂) parallèle audit axe (X), de façon que les dents de chaque pignon (36, 38) engrènent avec les faces opposées des dents (13) de la crémaillère (12) correspondante.

3. Système d'entraînement pour machines-outils selon la revendication 1, **caractérisé en ce que** deux moteurs (220, 320) intégrés à des unités d'entraînement (225, 325) respectives présentant également des arbres respectifs (222, 322) alignés le long du même axe (X) et interconnectés par des moyens mécaniques adaptés pour permettre à ladite unité d'entraînement du moteur (225, 325) de travailler de façon entièrement synchronisée.

4. Système d'entraînement pour machines-outils selon les revendications 2 et 3, **caractérisé en ce que** chacune des deux unités d'entraînement de moteur (225, 325) entraîne, au moyen des extrémités libres de chaque moteur (220, 320), un sous-ensemble (230, 330) correspondant.

5. Système d'entraînement pour machines-outils selon la revendication 3, **caractérisé en ce que** lesdits moyens pour permettre auxdites deux unités d'entraînement de moteur (225, 325) de travailler de façon entièrement synchronisée consistent en un arbre non déformable (250) fermement fixé aux arbres (222, 322) des mêmes unités d'entraînement de moteur (225, 325).

6. Machine-outil comportant une structure stationnaire avec une paire de supports espacés (14, 114 ; 214, 314) et un élément (10, 210) déplaçable par un système d'entraînement selon l'une quelconque des revendications précédentes.

7. Machine-outil selon la revendication 6, dans laquelle ladite structure stationnaire est un berceau de type à portique pourvu de deux épaulements (14, 114 ; 214, 314) et que ledit élément mobile est un élément (10 ; 21) en croix dans lequel lesdits épaulements supportent les crémaillères respectives (12, 112, 212, 312), chacun d'eux engrenant ave au moins un desdits pignons (36, 38, 236 ; 336) faisant partie d'au moins un sous-ensemble (30, 130 ; 230, 330) entraîné par le moteur.
